# EUROPÄISCHE PATENTSCHRIFT

(11) **EP 2 900 735 B1**
(45) Veröffentlichungstag und Bekanntmachung des Hinweises auf die Patenterteilung: **14.09.2016**
(21) Anmeldenummer: 13763225.3
(22) Anmeldetag: 16.09.2013
(51) Int. Cl.: C08J 3/05, C08G 18/66, C08G 18/70, C08G 18/73, C08G 18/75, C08G 18/79, C08G 18/12, C08G 18/22, C08G 18/24, C08G 18/28, C08G 18/32, C08G 18/36, C08G 18/42, C08G 18/48, C09J 175/04

(54) **WASSEREMULGIERBARE ISOCYANATE MIT VERBESSERTEM GLANZ**
WATER-EMULSIBLE ISOCYANATES HAVING IMPROVED GLOSS
ISOCYANATES ÉMULSIONNABLES DANS L'EAU À BRILLANCE AMÉLIORÉE

(30) Priorität: 28.09.2012 US 201261706806 P; 28.09.2012 EP 12186603
(43) Veröffentlichungstag der Anmeldung: 05.08.2015
(73) Patentinhaber: BASF SE, 67056 Ludwigshafen am Rhein (DE)
(72) Erfinder: STEINBRECHER, Angelika, Maria, Cluj-Napoca (RO); KELLER, Peter, 66583 Spiesen-Elversberg (DE); LUCAS, Frederic, 77654 Offenburg (DE)
(74) Vertreter: BASF IP Association
(86) Internationale Anmeldenummer: PCT/EP2013/069082
(87) Internationale Veröffentlichungsnummer: WO 2014/048776

(56) Entgegenhaltungen:
- EP-A1- 2 368 926
- US-A- 4 762 752

## Beschreibung

Die Erfindung betrifft ein Verfahren zur Herstellung von wasseremulgierbaren Isocyanaten und deren Verwendung.

Wasseremulgierbare Polyisocyanate werden wässrigen Polymer-Dispersionen als Vernetzungsmittel zugesetzt und sind in der Literatur vielfach beschrieben. Die Wasseremulgierbarkeit wird dadurch erreicht, dass man die Polyisocyanate mit Emulgatoren abmischt, die durch Reaktion der Polyisocyanate mit hydrophilen Molekülen erhalten werden.

Als hydrophile Moleküle vielfach verwendet werden nichtionische hydrophile Moleküle wie Polyalkylenoxid-Alkohole.

EP-A2 206 059 beschreibt in Wasser dispergierbare Polyisocyanat-Zubereitungen aus einem aliphatischen Polyisocyanat und einem Umsetzungsprodukt eines aliphatischen Polyisocyanats mit einem ein- oder mehrwertigen, nichtionischen Polyalkylenetheralkohol mit mindestens einer mindestens 10 Ethylenoxideinheiten aufweisenden Polyetherkette als Emulgator. Für geeignete Polyisocyanate werden umfangreiche Listen von aliphatischen und cycloaliphatischen Diisocyanaten angegeben, besonders bevorzugt Isocyanurate und Biurete auf Basis von 1,6-Diisocyanatohexan (HDI) und/oder Isocyanurate auf Basis von 1-lsocyanato-3,5,5-trimethyl-5-isocyanatomethyl-cyclohexan (IPDI).

EP-A1 540 985 beschreibt ebenfalls Polyisocyanatgemische, hier weisen jedoch die Polyetherketten einen mittleren Gehalt von 5,0 bis 9,9 Ethylenoxideinheiten auf.

EP-A2 486 881 beschreibt nichtwäßrige aliphatische Polyisocyanatzubereitungen aus einer Liste von aliphatischen Polyisocyanaten und einer die Dispergierbarkeit des aliphatischen Polyisocyanats gewährleistenden Menge eines Umsetzungsproduktes aus einem aromatischen oder aliphatischen Diisocyanat und einem ein- oder (weniger bevorzugt) mehrwertigen Polyalkylenetheralkohol mit mindestens 8 Ethylenoxideinheiten in der Polyetherkette. In den Beispielen werden ausschließlich monofunktionelle Polyethylenglykole eingesetzt. Die Umsetzung der Diisocyanate mit den Alkoholen erfolgt in einem Verhältnis von 60 bis 120 mol% an OH-Gruppen bezogen auf die NCO-Gruppen des Diisocyanats. Die so erhaltenen Produkte wirken dann als Emulgatoren in den Abmischungen mit Polyisocyanaten.

EP 959087 A1 beschreibt wasseremulgierbare polyethermodifizierte Polyisocyanatgemische, in denen ein hoher Anteil der Polyether über Allophanatgruppen an das Polyisocyanat gebunden ist.

Nachteilig daran ist, daß durch die Bildung von Allophanatgruppen pro Hydroxygruppe zwei Äquivalente Isocyanatgruppen abreagieren, also der NCO-Gehalt des Produktes gemessen am Edukt stark verringert wird.

DE-A1 199 58 170 beschreibt Polyether-modifizierte, wasserdispergierbare Polyisocyanatgemische, die mit einwertigen Polyalkylenoxidpolyetheralkoholen modifiziert sind. Ganz besonders bevorzugt sind Polyisocyanate beziehungsweise Polyisocyanatgemische mit Isocyanuratstruktur auf Basis HDI, IPDI und/oder 4,4'-Diisocyanatodicyclohexylmethan.

DE-A1 198 22 890 beschreibt wäßrige, zweikomponentige Polyurethan-Beschichtungssysteme, deren Härterkomponente aus Polyalkylenoxidpolyetheralkoholen und aliphatisch und/oder cycloaliphatisch gebundenen Isocyanatgruppen, bevorzugt Isocyanuratstrukturen auf Basis von HDI, IPDI und/oder 4,4'-Diisocyanatodicyclohexylmethan, unter Allophanatisierungsbedingungen hergestellt werden. Die überwiegende Bindung von Polyetherketten über Allophanatgruppen ist auch aus der DE-A1 198 47 077 bekannt.

Als nichtionische Emulgatoren sind auch mit Polyvinylpyrrolidon modifizierte Polyisocyanate beschrieben (EP-A2 754 713).

Als dispergieraktive Bausteine finden auch Carbonsäuregruppen enthaltende Polyalkylenoxidether Verwendung, wie in der DE-A1 100 07 820 und DE-A1 41 13 160 beschrieben, oder Polyetheresteralkohole (EP-A1 728 785).

DE-A1 40 01 783 beschreibt Polyisocyanatgemische, die bei einem Uretdiongehalt von 1 bis 23 Gew% zur Dispergierbarkeit chemisch gebundene Carboxylgruppen enthalten.

Weiterhin werden Carboxylgruppen enthaltende Verbindungen als Emulgatoren beschrieben (EP-A2 548 669), tertiäre Amino- und/oder Ammoniumgruppen (EP-A1 582 166 und EP-A1 531 820), saure Ester der Phosphorsäure (DE-A1 197 24 199) oder Sulfonsäuren (EP-A1 703 255).

Nachteilig an den beschriebenen Polyisocyanatmischungen ist, daß diese die Anforderungen, die an den Glanz der mit ihnen erhältlichen Beschichtungen gestellt werden, nicht erfüllen.

Wasseremulgierbare Isocyanate können zur Verbesserung der Dispergierbarkeit in organischen Lösungsmitteln wie z.B. Kohlensäureestern oder Lactonen gelöst werden, wie in der EP-A 697 424 beschrieben.

WO 2004/22624 beschreibt wasseremulgierbare Mischungen von Polyisocyanaten auf Basis 1,6-Hexamethylendiisocyanat mit Polyisocyanaten auf Basis von Isophorondiisocyanat, die sowohl eine hohe Härte als auch gute Wasseremulgierbarkeit zeigen.

Jedoch sind die Trocknungseigenschaften der mit diesen Beschichtungsmassen erhaltenen Beschichtungen unzureichend.

WO 2012/007431 beschreibt hochfunktionelle, Urethangruppen aufweisende Polyisocyanate, die durch Umsetzung mindestens eines multifunktionellen Alkohols mit mindestens einem Polyisocyanat in einem molaren Verhältnis von NCO-Gruppen zu OH-Gruppen von mindestens 3:1 1 erhältlich sind.

Nachteilig ist, daß diese hochfunktionellen, Urethangruppen aufweisenden Polyisocyanate nicht wasseremulgierbar sind.

WO 2011/124710 A beschreibt Beschichtungsmassen aus hydroxygruppenhaltigen Fettsäureglyceriden, Polyisocyanaten und Bindemitteln.

Die so erhaltenen Beschichtungen zeigen Selbstheilungseffekte beim Erwärmen.

Nachteilig ist, daß die Beschichtungsmassen, die ein dreikomponentiges System darstellen, nicht wasseremulgierbar sind.

Folgende Eigenschaften eines wasseremulgierbaren Isocyanats werden vom Anwender verlangt:
1. Das Isocyanat soll einfach zu emulgieren sein; die zwingende Verwendung anspruchsvoller Apparate wie z.B. hochscherenden Rührorganen ist nicht erwünscht.
2. Die Emulsion soll feinteilig sein, da ansonsten Störungen z.B des Glanzes oder Trübungen auftreten können.
3. Bei Beschichtungen ist ein hoher Glanz erwünscht.
4. Das wasseremulgierbare Isocyanat soll keine zu hohe Viskosität aufweisen.

Aufgabe der vorliegenden Erfindung war es, ein Verfahren zur Herstellung von wasseremulgierbare Polyisocyanate zur Verfügung zu stellen, die gute Emulgierbarkeitseigenschaften zeigen, eine Viskosität bei 23 °C von nicht mehr als 12 Pas aufweisen und mit denen Beschichtungen mit hohem Glanz erhalten werden.

Die Aufgabe wurde gelöst durch wasseremulgierbare Polyisocyanate, enthaltend
(A) mindestens ein Polyisocyanat auf Basis mindestens eines (cyclo)aliphatischen Diisocyanates,
(B) mindestens ein Polyol, das
   - eine Funktionalität an Hydroxygruppen von mindestens 2 und bis zu 4 und
   - ein zahlenmittleres Molgewicht von mindestens 92 bis 1500 g/mol aufweist,
(C) mindestens ein Ethylenoxidgruppen aufweisender Monoalkohol, der mindestens 7 Ethylenoxidgruppen aufweist, und
(D) gegebenenfalls Lösungsmittel, wobei
   - das Verhältnis von NCO-Gruppen in (A) zu Hydroxygruppen in (B) und (C) von mindestens 5:1 bis 100:1 beträgt,
   - der Gehalt an Ethylenoxidgruppen, berechnet als 44 g/mol, bezogen auf die Summe von (A), (B) und (C) mindestens 12 Gew%, bevorzugt mindestens 14, besonders bevorzugt mindestens 15 Gew% beträgt,
   - der Gehalt an Komponente (B) von 0,5 bis 4,0 Gew% beträgt,
   - der Gehalt an Komponente (C) mindestens 5 und bis zu 25 Gew% beträgt, und
   - die Viskosität bei 23 °C gemäß DIN EN ISO 3219/A.3 in einem Kegel-Platte-System mit einem Geschwindigkeitsgefälle von 1000 s⁻¹ von 2500 mPas bis 12000 mPas beträgt.

Die Mischungen zeigen leichte Emulgierbarkeit, führen zu einer stabilen und feinteiligen Emulsion und die mit ihnen erhältlichen Beschichtungen zeigen einen hohen Glanz.

Bei den Polyisocyanaten (A) handelt es sich um Oligomere von aliphatischen oder cycloaliphatischen Diisocyanaten, in dieser Schrift kurz als (cyclo)aliphatisch bezeichnet.

Die NCO Funktionalität solcher Verbindung beträgt in der Regel mindestens 1,8 und kann bis zu 8 betragen, bevorzugt 1,8 bis 5 und besonders bevorzugt 2 bis 4.

Als Polyisocyanate kommen Isocyanuratgruppen aufweisende Polyisocyanate, Uretdiongruppen aufweisende Polyisocyanate, Biuretgruppen aufweisende Polyisocyanate, Urethan- oder Allophanatgruppen aufweisende Polyisocyanate, Oxadiazintriongruppen oder Iminooxadiazindiongruppen enthaltende Polyisocyanate, Uretonimin-modifizierte Polyisocyanate von geradlinigen oder verzweigten C₄-C₂₀-Alkylendiisocyanaten, cycloaliphatischen Diisocyanaten mit insgesamt 6 bis 20 C-Atomen oder deren Gemische in Betracht.

Bei den Diisocyanaten handelt es sich bevorzugt um Isocyanate mit 4 bis 20 C-Atomen. Beispiele für übliche Diisocyanate sind aliphatische Diisocyanate wie Tetramethylendiisocyanat, Hexamethylendiisocyanat (1,6-Diisocyanatohexan), Octamethylendiisocyanat, Decamethylendiisocyanat, Dodecamethylendiisocyanat, Tetradecamethylendiisocyanat, Derivate des Lysindiisocyanates, Trimethylhexandiisocyanat oder Tetramethylhexandiisocyanat, cycloaliphatische Diisocyanate wie 1,4-, 1,3- oder 1,2-Diisocyanatocyclohexan, 4,4'- oder 2,4'-Di(isocyanatocyclohexyl)methan, 1-Isocyanato-3,3,5- trimethyl-5-(isocyanatomethyl)cyclohexan (Isophorondiisocyanat), 1,3- oder 1,4-Bis(isocyanatomethyl)cyclohexan oder 2,4-, oder 2,6-Di-isocyanato-1-methylcyclohexan sowie 3 (bzw. 4), 8 (bzw. 9)-Bis(isocyanatomethyl)-tricy-clo[5.2.1.0².⁶]decan-Isomerengemische.

Es können auch Gemische der genannten Diisocyanate vorliegen.

Die einsetzbaren Diisocyanate haben bevorzugt einen Gehalt an Isocyanatgruppen (berechnet als NCO, Molekulargewicht = 42) von 10 bis 60 Gew% bezogen auf das Diisocyanat(gemisch), bevorzugt 15 bis 60 Gew% und besonders bevorzugt 20 bis 55 Gew%.

Bevorzugt sind aliphatische bzw. cycloaliphatische, im Rahmen dieser Schrift als (cyclo)aliphatisch zusammengefaßt, Di- und Polyisocyanate, z.B. die vorstehend genannten aliphatischen bzw. cycloaliphatischen Diisocyanate, oder deren Mischungen.

Besonders bevorzugt sind Hexamethylendiisocyanat, 1,3-Bis(isocyanatomethyl)cyclo-hexan, Isophorondiisocyanat und 4,4'- oder 2,4'-Di(isocyanatocyclohexyl)methan, ganz besonders bevorzugt sind Isophorondiisocyanat und Hexamethylendiisocyanat, insbesondere bevorzugt ist Hexamethylendiisocyanat.

Isophorondiisocyanat liegt zumeist als ein Gemisch, und zwar der cis- und trans-Isomere vor, in der Regel im Verhältnis von ca. 60:40 bis 80:20 (w/w), bevorzugt im Verhältnis von ca. 70:30 bis 75:25 und besonders bevorzugt im Verhältnis von ca. 75:25.

Dicyclohexylmethan-4,4'-diisocyanat kann ebenfalls als Gemisch der verschiedenen cis- und trans-Isomere vorliegen.

Cycloaliphatische Isocyanate sind solche, die mindestens ein cycloaliphatisches Ringsystem enthalten.

Aliphatische Isocyanate sind solche, die ausschließlich gerade oder verzweigte Ketten enthalten, also acyclischen Verbindungen.

Für die vorliegende Erfindung können sowohl solche Di- und Polyisocyanate eingesetzt werden, die durch Phosgenierung der korrespondierenden Amine erhalten werden, als auch solche, die ohne die Verwendung von Phosgen, d. h. nach phosgenfreien Verfahren, hergestellt werden. Nach Angaben der EP-A-0 126 299 (USP 4 596 678), EP-A-126 300 (USP 4 596 679) und EP-A-355 443 (USP 5 087 739) beispielsweise können (cyclo)aliphatische Diisocyanate, z.B. wie 1,6-Hexamethylendiisocyanat (HDI), isomere aliphatische Diisocyanate mit 6 Kohlenstoffatomen im Alkylenrest, 4,4'- oder 2,4'-Di(isocyanatocyclohexyl)methan und 1-Isocyanato-3-isocy-anato-methyl-3,5,5-trimethyl-cyclohexan (Isophorondiisocyanat bzw. IPDI) hergestellt werden durch Umsetzung der (cyclo)aliphatischen Diamine mit beispielsweise Harnstoff und Alkoholen zu (cyclo)aliphatischen Biscarbaminsäureestern und deren thermische Spaltung in die entsprechenden Diisocyanate und Alkohole. Die Synthese erfolgt meist kontinuierlich in einem Kreislaufverfahren und gegebenenfalls in Gegenwart von N-unsubstituierten Carbaminsäureestern, Dialkylcarbonaten und anderen aus dem Reaktionsprozeß zurückgeführten Nebenprodukten. So erhaltene Di- oder Polyisocyanate weisen in der Regel einen sehr geringen oder sogar nicht meßbaren Anteil an chlorierten Verbindungen auf, was zu günstigen Farbzahlen der Produkte führt.

In einer Ausführungsform der vorliegenden Erfindung weisen die Di- und Polyisocyanate (A) einen Gesamtgehalt an hydrolysierbarem Chlor von weniger als 200 ppm auf, bevorzugt von weniger als 120 ppm, besonders bevorzugt weniger als 80 ppm, ganz besonders bevorzugt weniger als 50 ppm, insbesondere weniger als 15 ppm und speziell weniger als 10 ppm. Dies kann beispielsweise gemessen werden durch die ASTM-Vorschrift D4663-98. Es können aber selbstverständlich auch Di- und Polyisocyanate (A) mit einem höheren Chlorgehalt eingesetzt werden.

Weiterhin zu erwähnen sind
1) Isocyanuratgruppen aufweisende Polyisocyanate von aliphatischen und/oder cycloaliphatischen Diisocyanaten. Besonders bevorzugt sind hierbei die entsprechenden aliphatischen und/oder cycloaliphatischen Isocyanato-Isocyanurate und insbesondere die auf Basis von Hexamethylendiisocyanat und Isophorondiisocyanat. Bei den dabei vorliegenden Isocyanuraten handelt es sich insbesondere um Tris-isocyanatoalkyl- bzw. Trisisocyanatocycloalkyl-Isocyanurate, welche cyclische Trimere der Diisocyanate darstellen, oder um Gemische mit ihren höheren, mehr als einen Isocyanuratring aufweisenden Homologen. Die Isocyanato-Isocyanurate haben im allgemeinen einen NCO-Gehalt von 10 bis 30 Gew.-%, insbesondere 15 bis 25 Gew.-% und eine mittlere NCO-Funktionalität von 2,6 bis 8.
2) Uretdiondiisocyanate mit aliphatisch und/oder cycloaliphatisch gebundenen Isocyanatgruppen, vorzugsweise aliphatisch und/oder cycloaliphatisch gebundenen und insbesondere die von Hexamethylendiisocyanat oder Isophorondiisocyanat abgeleiteten. Bei Uretdiondiisocyanaten handelt es sich um cyclische Dimerisierungsprodukte von Diisocyanaten.
   Die Uretdiondiisocyanate können als alleinige Komponente oder im Gemisch mit anderen Polyisocyanaten, insbesondere den unter 1) genannten, eingesetzt werden.
3) Biuretgruppen aufweisende Polyisocyanate mit cycloaliphatisch oder aliphatisch gebundenen, bevorzugt cycloaliphatisch oder aliphatisch gebundenen Isocyanatgruppen, insbesondere Tris(6-isocyanatohexyl)biuret oder dessen Gemische mit seinen höheren Homologen. Diese Biuretgruppen aufweisenden Polyisocyanate weisen im allgemeinen einen NCO-Gehalt von 18 bis 22 Gew.-% und eine mittlere NCO-Funktionalität von 2,8 bis 4,5 auf.
4) Urethan- und/oder Allophanatgruppen aufweisende Polyisocyanate mit aliphatisch oder cycloaliphatisch gebundenen, bevorzugt aliphatisch oder cycloaliphatisch gebundenen Isocyanatgruppen, wie sie beispielsweise durch Umsetzung von überschüssigen Mengen an Hexamethylendiisocyanat oder an Isophorondiisocyanat mit ein- oder mehrwertigen Alkoholen wie z.B. Methanol, Ethanol, *iso*-Propanol, n-Propanol, n-Butanol, *iso*-Butanol, *sek* Butanol, *tert*-Butanol, n-Hexanol, n-Heptanol, n-Octanol, n-Decanol, n-Dodecanol (Laurylalkohol), 2-Ethylhexanol, n-Pentanol, Stearylalkohol, Cetylalkohol, Laurylalkohol, Ethylenglykolmonomethylether, Ethylenglykolmonoethylether, 1,3-Propandiolmonomethylether, Cyclopentanol, Cyclohexanol, Cyclooctanol, Cyclododecanol, Trimethylolpropan, Neopentylglykol, Pentaerythrit, 1,4-Butan-diol, 1,6-Hexandiol, 1,3-Propandiol, 2-Ethyl-1,3-Propandiol, 2-Methyl-1,3-Propan-diol, Ethylenglykol, Diethylenglykol, Triethylenglykol, Tetraethylenglykol, Pentaethylenglykol, Glycerin, 1,2-Dihydroxypropan, 2,2-Dimethyl-1,2-ethandiol, 1,2-Butandiol, 1,4-Butan-diol, 3-Methylpentan-1,5-diol, 2-Ethylhexan-1,3-diol, 2,4-Diethyloctan-1,3-diol, Hydroxy-pivalinsäureneopentylglykolester, Ditrimethylolpropan, Dipentaerythrit, 2,2-Bis(4-hydro-xycyclohexyl)propan, 1,1-, 1,2-, 1,3- und 1,4-Cyclohexandimethanol, 1,2-, 1,3- oder 1,4-Cyclohexandiol oder deren Gemischen erhalten werden können. Diese Urethan- und/oder Allophanatgruppen aufweisenden Polyisocyanate haben im allgemeinen einen NCO-Gehalt von 12 bis 20 Gew.-% und eine mittlere NCO-Funktionalität von 2,5 bis 4,5.
5) Oxadiazintriongruppen enthaltende Polyisocyanate, vorzugsweise von Hexamethylendiisocyanat oder Isophorondiisocyanat abgeleitet. Solche Oxadiazintriongruppen enthaltenden Polyisocyanate sind aus Diisocyanat und Kohlendioxid zugänglich.
6) Iminooxadiazindiongruppen enthaltende Polyisocyanate, vorzugsweise von Hexamethylendiisocyanat oder Isophorondiisocyanat abgeleitet. Solche Iminooxadiazin-diongruppen enthaltenden Polyisocyanate sind aus Diisocyanaten mittels spezieller Katalysatoren herstellbar.
7) Uretonimin-modifizierte Polyisocyanate.
8) Carbodiimid-modifizierte Polyisocyanate.
9) Hyperverzweigte Polyisocyanate, wie sie beispielsweise bekannt sind aus der DE-A1 10013186 oder DE-A1 10013187.
10) Polyurethan-polyisocyanat-Präpolymere, aus Di- und/oder Polyisocyanaten mit Alkoholen.
11) Polyharnstoff-Polyisocyanat-Präpolymere.

Die Polyisocyanate 1) bis 11) können im Gemisch, gegebenenfalls auch im Gemisch mit Diisocyanaten, eingesetzt werden.

Die Polyisocyanate (A) können auch zumindest teilweise in blockierter Form vorliegen.

Derartige Gruppen zur Blockierung von Isocyanaten sind beschrieben in D. A. Wicks, Z. W. Wicks, Progress in Organic Coatings, 36, 148-172 (1999), 41, 1-83 (2001) sowie 43, 131-140 (2001).

Dies ist besonders dann bevorzugt, wenn die erfindungsgemäßen Beschichtungsmassen einkomponentig eingesetzt werden sollen.

Bevorzugte Verbindungen (A) sind die Urethane, Biurete und Isocyanurate, besonders bevorzugt die Isocyanurate von 1,6-Hexamethylendiisocyanat (HDI) oder 1-Isocyanato-3-isocyanatomethyl-3,5,5-trimethyl-cyclohexan, ganz besonders bevorzugt von 1,6-Hexamethylendiisocyanat.

Herstellbedingt können Polyisocyanate (A) noch einen geringen Anteil von dem ihnen zugrundeliegenden monomerem Diisocyanat aufweisen, beispielsweise bis zu 5 Gew%, besonders bevorzugt bis zu 3 Gew%, ganz besonders bevorzugt bis zu 2, insbesondere bis zu 1, speziell bis zu 0,5 und sogar bis zu 0,25 Gew%.

Bei dem Polyol (B) handelt es sich um mindestens ein Polyol, das
- eine Funktionalität an Hydroxygruppen von mindestens 2 und bis zu 4 und
- ein zahlenmittleres Molgewicht von mindestens 92 bis 1500 g/mol
aufweist.

Die Funktionalität sollte mindestens 2, bevorzugt mindestens 2 und bis zu 4 betragen. Insbesondere ist eine Funktionalität bevorzugt, die im statistischen Mittel von 2 bis 3 beträgt.

Bei den Polyolen mit der oben genannten Funktionalität kann es sich bevorzugt um
(B1) Veresterungsprodukte mindestens einer Fettsäure mit mindestens einem Polyalkohol und/oder um
(B2) Veresterungsprodukte mindestens einer Hydroxyalkancarbonsäure oder deren entsprechendem Lacton mit mindestens einem Polyalkohol und/oder um
(B3) mindestens einen optional alkoxylierten Polyalkohol handeln.

Bei den Verbindungen (B1) handelt es sich um Veresterungsprodukte mindestens einer Fettsäure mit mindestens einem Polyalkohol.
Eingesetzt wird mindestens eine Fettsäure, beispielsweise ein bis fünf, bevorzugt ein bis drei, besonders bevorzugt ein bis zwei und ganz besonders bevorzugt genau eine Fettsäure.

Es stellt eine bevorzugte Ausführungsform der vorliegenden Erfindung dar, daß insbesondere natürliche Fettsäuren in Form ihrer Gemische eingesetzt werden.

Die Fettsäure weist mindestens 12 Kohlenstoffatome auf, bevorzugt mindestens 14 und besonders bevorzugt mindestens 16.

In der Regel weisen die Fettsäuren bis zu 40 Kohlenstoffatome auf, bevorzugt bis zu 30 und besonders bevorzugt bis zu 20.

Bei den Fettsäuren handelt es sich in der Regel um Alkan-, Alken-, Alkadien- oder Alkapolyencarbonsäuren, die eine oder mehrere Hydroxygruppen tragen können und die geradkettig oder verzweigt sein können, bevorzugt geradkettig, bevorzugt Alkan- oder Alkencarbonsäuren, besonders bevorzugt Alkancarbonsäuren, die eine oder mehrere Hydroxygruppen tragen können.

Beispiele dafür sind Laurinsäure, Myristinsäure, Pentadecansäure, Palmitinsäure, Margarinsäure, Stearinsäure, Nonadecansäure, Arachinsäure, Behensäure, Lignocerinsäure, Hexacosansäure, Octacosansäure, Triacontansäure, Dotricosansäure, Tritricosansäure, Tetratricosansäure, Pentatricosansäure, Ölsäure, Linolsäure und Linolensäure.

Von dieser mindestens einen Fettsäure trägt mindestens eine Fettsäure mindestens eine Hydroxygruppe, beispielsweise ein bis drei, bevorzugt ein oder zwei und besonders bevorzugt genau eine Hydroxygruppe.

Ein bevorzugtes Beispiel für eine Hydroxygruppen tragende Fettsäure ist Ricinolsäure (12-Hydroxy-(Z)-Octadec-9-ensäure) und Isoricinolsäure (9-Hydroxy-(Z)-12-octadecensäure), wobei es erfindungsgemäß keine Rolle spielt, in welcher enantiomeren Form sie eingesetzt wird, bevorzugt als (R)-Form, oder ob sie enantiomerenrein, als enantiomerenangereichertes Gemisch oder als Enantiomerengemisch eingesetzt wird. Ein weiteres bevorzugtes Beispiel ist 12-Hydroxystearinsäure.

Bei dem Polyalkohol handelt es sich um mindestens ein, bevorzugt genau ein mindestens difunktionelles Polyol, bevorzugt mit zwei bis vier, besonders bevorzugt mit zwei bis drei Hydroxygruppen.

Beispiele dafür sind Trimethylolbutan, Trimethylolpropan, Trimethylolethan, Pentaerythrit, Glycerin, Ditrimethylolpropan und Diglycerol.

In einer bevorzugten Ausführungsform handelt es sich bei der Verbindung (B1) um Ricinusöl mit einer OH-Zahl von 160 bis 173 mg KOH/g.
Als Ricinusöl im Rahmen der vorliegenden Schrift wird dabei ein zumindest teilweise, bevorzugt vollständig verestertes Acylglycerol bezeichnet, von deren Acylgruppen es sich zumindest bei einer, bevorzugt bei mindestens zweien um Ricinolsäure oder Isoricinolsäure, bevorzugt Ricinolsäure handelt.

Bevorzugt handelt es sich beispielsweise dem Gemisch von Fettsäuren um ein Gemisch von zwei Molekülen Ricinolsäure mit einer Fettsäure, die keine Hydroxygruppe trägt, bevorzugt ausgewählt aus der Gruppe bestehend aus Ölsäure, Linolsäure, Palmitinsäure und Stearinsäure.

Bei den Verbindungen (B2) handelt es sich um Veresterungsprodukte mindestens einer Hydroxyalkancarbonsäure oder deren entsprechendem Lacton mit mindestens einem Polyalkohol. Bei dem Polyalkohol handelt es sich um mindestens ein, bevorzugt genau ein mindestens difunktionelles Polyol, bevorzugt mit zwei bis vier, besonders bevorzugt zwei bis drei Hydroxygruppen.

Beispiele dafür sind Ethylenglykol, Diethylenglykol, Triethylenglykol, 1,2-Propandiol, 1,3-Propandiol, 1,1-Dimethylethan-1,2-diol, 2-Butyl-2-ethyl-1,3-Propandiol, 2-Ethyl-1,3-Propandiol, 2-Methyl-1,3-Propandiol, Neopentylglykol, Hydroxypivalinsäureneopentylglykolester, 1,2-, 1,3-oder 1,4-Butandiol, 1,6-Hexandiol, 1,10-Dekandiol, Bis-(4-hydroxycyclohexan)isopropyliden, Tetramethylcyclobutandiol, 1,2-, 1,3- oder 1,4-Cyclohexandiol, Cyclooctandiol, Norbornandiol, Pinandiol, Decalindiol, 2-Ethyl-1,3-Hexandiol, 2,4-Diethyl-oktan-1,3-diol, 2,2-Bis(4-hydroxycyclohexyl)propan, 1,1-, 1,2-, 1,3- und 1,4-Cyclohexandimethanol, 1,2-, 1,3- oder 1,4-Cyclohexandiol, Trimethylolbutan, Trimethylolpropan, Trimethylolethan, Pentaerythrit, Glycerin, Ditrimethylolpropan und Diglycerol.

Bevorzugt sind Polyesterole auf Lacton-Basis, wobei es sich um Homo- oder Mischpolymerisate von Lactonen, bevorzugt um endständige Hydroxylgruppen aufweisende Anlagerungsprodukte von Lactonen an geeignete entsprechend funktionelle Startermoleküle handelt.

Als Lactone kommen bevorzugt solche in Betracht, die sich von Verbindungen der allgemeinen Formel HO-(CH₂)_{z}-COOH ableiten, wobei z eine Zahl von 1 bis 20 ist und ein H-Atom einer Methyleneinheit auch durch einen C₁- bis C₄-Alkylrest substituiert sein kann. Beispiele sind ε-Caprolacton, β-Propiolacton, gamma-Butyrolacton und/oder Methyl-ε-caprolacton, 4-Hydroxybenzoesäure, 6-Hydroxy-2-naphthalinsäure oder Pivalolacton sowie deren Gemische. Geeignete Starterkomponenten sind z.B. die vorstehend genannten Polyole. Die entsprechenden Polymerisate des ε-Caprolactons sind besonders bevorzugt.

Besonders bevorzugt sind als Verbindungen (B2) folgende Verbindungen:

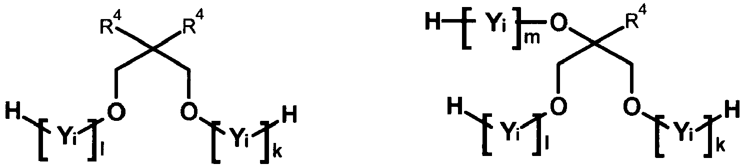

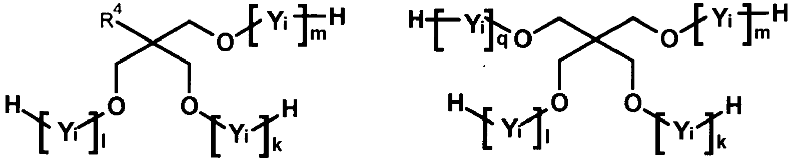

### Darin bedeuten

R⁴ Wasserstoff oder einen C₁- bis C₄-Alkylrest,
k, I, m und q jeweils unabhängig voneinander eine positive ganze Zahl von 1 bis 5, bevorzugt 1 bis 4 und besonders 2 bis 3,
Yᵢ für jedes i jeweils unabhängig voneinander einen Rest -[-O-(CH₂)_{Z}-(C=O)-]- und
z eine positive ganze Zahl von 2 bis 6, bevorzugt 2 bis 5, besonders bevorzugt 3 bis 5.

Bei der Komponente (B3) handelt es sich um mindestens einen, bevorzugt ein bis vier, besonders bevorzugt ein bis drei, ganz besonders bevorzugt ein oder zwei und insbesondere genau einen optional alkoxylierten Polyalkohol.

Bei dem Polyalkohol handelt es sich um mindestens ein, bevorzugt genau ein mindestens difunktionelles Polyol, bevorzugt mit zwei bis vier, besonders bevorzugt mit drei oder vier und ganz besonders bevorzugt mit drei Hydroxygruppen.

Bevorzugte Verbindungen (B3) sind solche der Formel 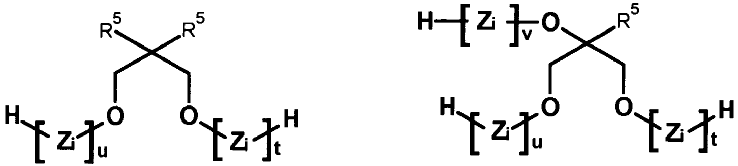 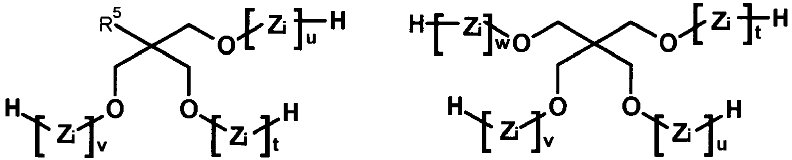 worin
R⁵ Wasserstoff oder einen C₁- bis C₄-Alkylrest,
t, u, v und w jeweils unabhängig voneinander 0 oder eine positive ganze Zahl von 1 bis 6, bevorzugt bis 4 und besonders bevorzugt bis 3,
jedes Zᵢ für i = 1 bis t, 1 bis u, 1 bis v und 1 bis w unabhängig voneinander ausgewählt sein kann aus der
   pe -CH₂-CH₂-O-, -CH₂-CH(CH₃)-O-, -CH(CH₃)-CH₂-O-, -CH₂-C(CH₃)₂-O-, -C(CH₃)₂-CH₂-O- -CH ₂-CHVin-O-, -CHVin-CH₂-O-, -CH₂-CHPh-O- und -CHPh-CH₂-O- bevorzugt aus der Gruppe -CH₂-CH₂-O-, -CH₂-CH(CH₃)-O- und -CH(CH₃)-CH₂-O-, und besonders zugt -CH₂-CH₂-O-.

Als Diole kommen in Betracht Ethylenglykol, Diethylenglykol, Triethylenglykol, 1,2-Propandiol, 1,3-Propandiol, 1,1-Dimethylethan-1,2-diol, 2-Butyl-2-ethyl-1,3-Propandiol, 2-Ethyl-1,3-Propandiol, 2-Methyl-1,3-Propandiol, Neopentylglykol, Hydroxypivalinsäureneopentylglykolester, 1,2-, 1,3-oder 1,4-Butandiol, 1,6-Hexandiol, 1,10-Dekandiol, Bis-(4-hydroxycyclohexan)isopropyliden, Tetramethylcyclobutandiol, 1,2-, 1,3- oder 1,4-Cycfohexandiol, Cyclooctandiol, Norbornandiol, Pinandiol, Decalindiol, 2-Ethyl-1,3-Hexandiol, 2,4-Diethyl-oktan-1,3-diol, 2,2-Bis(4-hydroxycyclohexyl)propan, 1,1-, 1,2-, 1,3-und 1,4-Cyclohexandimethanol, 1,2-, 1,3- oder 1,4-Cyclohexandiol, bevorzugt sind 1,2-Propandiol, Ethylenglykol, 2,2-Dimethyl-1,2-Ethandiol, 1,3-Propandiol, 1,2-Butandiol, 1,4-Butandiol, 3-Methylpentan-1,5-diol, 2-Ethylhexan-1,3-diol, 2,4-Diethyloctan-1,3-diol, 1,6-Hexandiol.

Als Triole kommen in Betracht Trimethylolbutan, Trimethylolpropan, Trimethylolethan und Glycerin.

Beispiele für Verbindungen (B3) sind Trimethylolbutan, Trimethylolpropan, Trimethylolethan, Pentaerythrit, Glycerin, Ditrimethylolpropan und Diglycerol, sowie deren je Hydroxygruppe ein bis sechsfach, bevorzugt ein bis vierfach und besonders bevorzugt ein bis dreifach ethoxylierten und/oder propoxylierten, bevorzugt ethoxylierten Produkte, bevorzugt sind Glycerin, Trimethylolpropan, Pentaerythrit, bis zu 18fach ethoxyliertes Glycerin, bis zu 18fach propoxyliertes Glycerin, bis zu 18fach ethoxyliertes Trimethylolpropan und bis zu 18fach gemischt-ethoxyliertes und propoxyliertes Trimethylolpropan, besonders bevorzugt sind Glycerin, Trimethylolpropan und bis zu 18fach ethoxyliertes Trimethylolpropan.

Bei der Komponente (C) handelt es sich um einen mindestens 7, bevorzugt mindestens 10 Ethylenoxidgruppen aufweisenden Monoalkohol.

In der Regel enthält die Komponente (C) nicht mehr als 30 Ethylenoxidgruppen, bevorzugt nicht mehr als 25 und besonders bevorzugt nicht mehr als 20 Ethylenoxidgruppen.

Unter Ethylenoxidgruppen werden dabei Gruppen -CH₂-CH₂-O- verstanden, die sich wiederholend in der Komponente (C) eingebaut sind.

Als Monoole, deren ethoxylierte Produkte als Komponenten (C) eingesetzt werden könnn, kommen in Betracht Methanol, Ethanol, iso-Propanol, n-Propanol, n-Butanol, iso-Butanol, sek-Butanol, tert-Butanol, n-Hexanol, n-Heptanol, n-Octanol, n-Decanol, n-Dodecanol (Laurylalkohol), 2-Ethylhexanol, Cyclopentanol, Cyclohexanol, Cyclooctanol und Cyclododecanol. Bevorzugt sind die genannten C₁ bis C₄-Alkanole, besonders bevorzugt ist Methanol.

Besonders bevorzugte Verbindungen (C) sind Polyalkylenoxidpolyetheralkohole, die erhältlich sind durch Alkoxylierung von Monohydroxyverbindungen der allgemeinen Formel

R¹-O-H

oder sekundären Monoaminen der allgemeinen Formel

R²R³N-H,

in welchen
R¹, R² und R³ unabhängig voneinander unabhängig voneinander jeweils C₁ - C₁₈-Alkyl, gegebenenfalls durch ein oder mehrere Sauerstoff- und/oder Schwefelatome und/oder ein oder mehrere substituierte oder unsubstituierte Iminogruppen unterbrochenes C₂ - C₁₈-Alkyl, C₆ - C₁₂-Aryl, C₅ - C₁₂-Cycloalkyl oder einen fünf- bis sechsgliedrigen, Sauerstoff-, Stickstoff- und/oder Schwefelatome aufweisenden Heterocyclus bedeuten oder R² und R³ gemeinsam einen ungesättigten, gesättigten oder aromatischen und gegebenenfalls durch ein oder mehrere Sauerstoff- und/oder Schwefelatome und/oder ein oder mehrere substituierte oder unsubstituierte Iminogruppen unterbrochenen Ring bilden, wobei die genannten Reste jeweils durch funktionelle Gruppen, Aryl, Alkyl, Aryloxy, Alkyloxy, Halogen, Heteroatome und/oder Heterocyclen substituiert sein können.
Bevorzugt ist R¹ C₁- bis C₄-Alkyl, d.h. Methyl, Ethyl, *iso*-Propyl, n-Propyl, n-Butyl, *iso*-Butyl, *sek-*Butyl oder *tert*-Butyl, besonders bevorzugt ist R¹ Methyl.

Beispielsweise geeignete einwertige Startermoleküle können gesättigte Monoalkohole wie Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol, Cyclopentanol, die isomeren Methylcyclohexanole oder Hydroxymethylcyclohexan, 3-Ethyl-3-hydroxymethyloxetan, oder Tetrahydrofurfurylalkohol; ungesättigte Alkohole wie Allylalkohol, 1,1-Dimethyl-allylalkohol oder Oleinalkohol, aromatische Alkohole wie Phenol, die isomeren Kresole oder Methoxyphenole, araliphatische Alkohole wie Benzylalkohol, Anisalkohol oder Zimtalkohol; sekundäre Monoamine wie Dimethylamin, Diethylamin, Dipropylamin, Diisopropylamin, Di-n-butylamin, Diisobutylamin, Bis-(2-ethylhexyl)-amin, N-Methyl- und N-Ethylcyclohexylamin oder Dicyclohexylamin, heterocylische sekundäre Amine wie Morpholin, Pyrrolidin, Piperidin oder 1 H-Pyrazol, sowie Aminoalkohole wie 2-Dimethylaminoethanol, 2-Diethylaminoethanol, 2-Diisopropylaminoethanol, 2-Dibutylaminoethanol, 3-(Dimethylamino)-1-propanol oder 1-(Dimethylamino)-2-propanol.

Bevorzugte Verbindungen (C) sind Polyetheralkohole auf Basis von Polyalkylenoxidpolyetheralkoholen, bei deren Herstellung gesättigte aliphatische oder cycloaliphatische Alkohole der oben genannten Art als Startermoleküle eingesetzt wurden. Ganz besonders bevorzugt sind solche auf Basis von Polyalkylenoxidpolyetheralkoholen, die unter Verwendung von gesättigten aliphatischen Alkoholen mit 1 bis 4 Kohlenstoffatomen im Alkylrest hergestellt wurden. Insbesondere bevorzugt sind auf Methanol gestartete Polyalkylenoxidpolyetheralkohole.

Die einwertigen Polyalkylenoxidpolyetheralkohole weisen im statistischen Mittel in der Regel 7 bis 30, vorzugsweise 7 bis 25, besonders bevorzugt 7 bis 20, ganz besonders bevorzugt 10 bis 20 Ethylenoxideinheiten pro Molekül auf.

Bevorzugte Polyetheralkohole (C) sind somit Verbindungen der Formel

R¹-O-[-Xᵢ-]ₖ-H

worin
R¹ die oben genannten Bedeutungen hat,
k für eine ganze Zahl von 5 bis 30, bevorzugt 7 bis 25, besonders bevorzugt 7 bis 20 und insbesondere 10 bis 20 steht und
jedes Xᵢ für i = 1 bis k für -CH₂-CH₂-O- steht.

Die Polyetheralkohole können in untergeordneten Mengen noch weitere gegenüber Isocyanaten reaktive Verbindungen mit anionischen oder kationischen Gruppen, beispielsweise mit Carboxylat-, Sulfonat- oder Ammoniumgruppen, als hydrophile Aufbaukomponenten enthalten. Dies ist jedoch weniger bevorzugt.

Zur Herstellung der wasseremulgierbaren Polyisocyanate werden zumindest ein Teil, bevorzugt die vollständige Menge der Ausgangskomponente (A) und (B) sowie (C) bei Temperaturen von 40 bis 180°C, vorzugsweise 50 bis 150°C, unter Einhaltung eines NCO-/OH-Äquivalentverhältnisses von mindestens 5 : 1, bevorzugt mindestens 7:1 und besonders bevorzugt mindestens 10:1 und einem NCO-/OH-Äquivalentverhältnis bis zu 100:1, bevorzugt bis zu 50:1, besonders bevorzugt bis zu 30:1, ganz besonders bevorzugt bis zu 25:1 und insbesondere bis zu 18:1 mit zumindest einem Teil, bevorzugt der Gesamtmenge der Verbindung (B) und/oder (C) umgesetzt.

Es ist auch möglich, wenn auch weniger bevorzugt, Ausgangskomponente (A) zunächst zumindest teilweise mit (B) und erst anschließend mit (C) umzusetzen, oder umgekehrt, Ausgangskomponente (A) zunächst zumindest teilweise mit (C) und erst anschließend mit (B) umzusetzen. Bevorzugt ist jedoch die gleichzeitige Umsetzung von (A), (B) und (C).

Das Reaktionsgemisch wird mit der Komponente (C) in einer solchen Menge umgesetzt, daß das Endprodukt einen Gehalt an Ethylenoxidgruppen, berechnet als 44 g/mol, bezogen auf die Summe der Komponenten (A), (B) und (C) von mindestens 12 Gew% aufweist, bevorzugt mindestens 14 und besonders bevorzugt mindestens 15 Gew%. Der Gehalt an Ethylenoxidgruppen überschreitet in der Regel nicht 25 Gew%, bevorzugt nicht mehr als 23, besonders bevorzugt nicht mehr als 20 Gew%.

Die Reaktionsdauer beträgt in der Regel 10 min bis 5 Stunden, bevorzugt 15 min bis 4 Stunden, besonders bevorzugt 20 bis 180 min und ganz besonders bevorzugt 30 bis 120 min.

Zur Beschleunigung der Reaktion können gegebenenfalls geeignete Katalysatoren eingesetzt werden.

Hierbei handelt es sich um die üblichen für diese Zwecke bekannten Katalysatoren, beispielsweise um Metallcarboxylate, Metallchelate oder tertiäre Amine der in der GB-A-0 994 890 beschriebenen Art, um Alkylierungsmittel der in der US-A-3 769 318 beschriebenen Art oder um starke Säuren, wie sie in der EP-A-0 000 194 beispielhaft beschrieben sind.

Geeignete Katalysatoren sind insbesondere Zinkverbindungen, wie z. B. Zink-(II)-stearat, Zink(II)-n-octanoat, Zink-(II)-2-ethyl-1-hexanoat, Zink-(II)-naphthenat oder Zink-(II)-acetylacetonat, Zinnverbindungen, wie z. B. Zinn(II)-n-octanoat, Zinn-(II)-2-ethyl-I-hexanoat, Zinn-(II)-laurat, Dibutylzinnoxid, Dibutylzinndichlorid, Dibutylzinndiacetat, Dibutylzinndilaurat, Dibutylzinndimaleat oder Dioctylzinndiacetat, Aluminium-tri(ethylacetoacetat), Eisen-(III)-chlorid, Kaliumoctoat, Mangan-, Cobalt-, Wismut-, Zn-(II)-, Zr-(IV) oder Nickelverbindungen sowie starke Säuren, wie z. B. Trifluoressigsäure, Schwefelsäure, Chlorwasserstoff, Bromwasserstoff, Phosphorsäure oder Perchlorsäure, oder beliebige Gemische dieser Katalysatoren.

Geeignete, wenngleich weniger bevorzugte Katalysatoren für das Verfahren sind auch solche Katalysatoren, wie sie beispielsweise in der EP-A-0 649 866 Seite 4, Zeile 7 bis Seite 5, Zeile 15 beschrieben sind.

Bevorzugte Katalysatoren für das erfindungsgemäße Verfahren sind Zinkverbindungen der obengenannten Art. Ganz besonders bevorzugt ist die Verwendung von Zink-(II)-n-octanoat, Zink-(II)-2-ethyl-1-hexanoat und/oder Zink-(II)-stearat.

Diese Katalysatoren kommen, falls überhaupt, in einer Menge von 0,001 bis 5 Gew.-%, vorzugsweise 0,005 bis 1 Gew.-%, bezogen auf das Gesamtgewicht der Reaktionspartner zum Einsatz.

Die Polyaddition zur Herstellung der Polyurethanzubereitung kann besonders bevorzugt in Anwesenheit von Cäsiumsalzen erfolgen, wie in DE 10161156 beschrieben. Bevorzugte Cäsiumsalze sind dabei Verbindungen, in denen folgende Anionen eingesetzt werden: F-, Cl-, CIO-, CIO₃-, CIO₄-, Br, J-, JO₃-, CN-, OCN-, NO₂-, NO₃-, HCO₃-, CO₃²⁻, S²⁻, SH-, HSO₃-, SO₃²⁻, HSO₄⁻, SO₄²⁻, S₂O₂²⁻, S₂O₄²⁻, S₂O₅²⁻, S₂O₆²⁻, S₂O₇²⁻, S₂O₈²⁻, H₂PO₂⁻, H₂PO₄⁻, HPO₄²⁻, PO₄³⁻, P₂O₇⁴⁻, (OCnH₂n+₁)⁻, (CₙH₂ₙ-₁O₂)⁻, (CₙH₂ₙ-₃O₂)⁻ sowie (Cₙ+₁H₂n-₂O₄)²⁻, wobei n für die Zahlen 1 bis 20 steht.

Besonders bevorzugt sind dabei Cäsiumcarboxylate, bei denen das Anion den Formeln (CₙH₂ₙ₋₁O₂)⁻ sowie (Cₙ₊₁H₂ₙ-₂O₄)²⁻ mit n gleich 1 bis 20, gehorcht. Ganz besonders bevorzugte Cäsiumsalze weisen als Anionen Monocarboxylate der allgemeinen Formel (CₙH₂ₙ-₁O₂)⁻ auf, wobei n für die Zahlen 1 bis 20 steht. Hierbei sind insbesondere zu erwähnen Formiat, Acetat, Propionat, Hexanoat und 2-Ethylhexanoat.

Die Cäsiumsalze werden in Mengen von 0,01 bis 10 mmol Cäsiumsalz pro kg lösungsmittelfreier Ansatz eingesetzt. Bevorzugt werden sie in Mengen von 0,05 bis 2 mmol Cäsiumsalz pro kg lösungsmittelfreier Ansatz verwendet.

Die Cäsiumsalze können dem Ansatz in fester Form, bevorzugt jedoch in gelöster Form zugesetzt werden. Als Lösemittel sind polare, aprotische Lösemittel oder auch protische Lösemittel geeignet. Besonders geeignet sind neben Wasser auch Alkohole; ganz besonders geeignet sind Polyole, wie sie auch sonst als Bausteine für Polyurethane verwendet werden, wie z.B. Ethan-, Propan- und Butandiole. Die Verwendung der Cäsiumsalze erlaubt es, die Polyaddition unter den üblichen Bedingungen zu führen.

Die Zugabe zum Reaktionsgemisch kann dabei nach beliebigen Methoden erfolgen. So ist es beispielsweise möglich, den gegebenenfalls mitzuverwendenden Katalysator entweder der Polyisocyanatkomponente (A), (B) und/oder der Komponente (C) vor Beginn der eigentlichen Umsetzung zuzumischen. Ebenso ist es möglich, den Katalysator dem Reaktionsgemisch zu einem beliebigen Zeitpunkt während der Reaktion oder im Sinne einer zweistufigen Reaktionsführung auch im Anschluß an die Urethanisierung, d. h. wenn der einem vollständigen Umsatz von Isocyanat und Hydroxylgruppen theoretisch entsprechende NCO-Gehalt erreicht ist, zuzusetzen.

In einer bevorzugten Ausführungsform der vorliegenden Erfindung sind die Komponenten (B) und (C) überwiegend über Urethangruppen gebunden, wohingegen die Bindung über Allophanatgruppen den geringeren Teil ausmachen soll.

Bezogen auf die mit einem Isocyanat reagierten Hydroxygruppen in den Komponenten (B) und (C) sind bevorzugt mehr als 50 mol% über Urethangruppen gebunden, besonders bevorzugt mindestens 60 mol%, ganz besonders bevorzugt mindestens 66 mol%, insbesondere mindestens 75 mol%, speziell mindestens 80 mol% und sogar mindestens 90 mol%.

Die Reaktionsbedingungen werden dementsprechend bevorzugt so gewählt, daß im Produkt weniger als 10 mol% der Hydroxygruppen in den Komponenten (B) und (C) über Allophanatgruppen gebunden sind. Dies kann beispielsweise dadurch erreicht werden, daß man solche Reaktionsbedingungen vermeidet, die in EP 959087 A1 zum Erzielen eines hohen Allophanatgehalts beschrieben sind.

Dies kann bevorzugt erreicht werden, indem man unter den genannten Katalysatoren solche auswählt, die in lediglich geringem Ausmaß Allophanatgruppen bilden.

Insbesondere kann die Bildung von Allophanatgruppen gering gehalten werden, indem man in Anwesenheit eines Katalysators die Reaktionstemperatur bei nicht mehr als 90°C, bevorzugt nicht mehr als 85 und besonders bevorzugt bei nicht mehr als 80 °C hält.

Der Verlauf der Umsetzung kann durch z. B. titrimetrische Bestimmung des NCO-Gehaltes verfolgt werden. Nach Erreichen des angestrebten NCO-Gehaltes wird die Reaktion abgebrochen. Dies kann bei rein thermischer Reaktionsführung beispielsweise durch Abkühlen des Reaktionsgemisches auf Raumtemperatur erfolgen. Bei der Verwendung eines Katalysators der genannten Art wird die Umsetzung im allgemeinen aber durch Zugabe geeigneter Desaktivatoren abgestoppt. Als Desaktivatoren eignen sich beispielsweise anorganische oder organische Säuren, die entsprechenden Säurehalogenide und Alkylierungsmittel. Beispielhaft genannt seien Phosphorsäure, Monochloressigsäure, Dodecylbenzolsulfonsäure, Benzoylchlorid, Dimethylsulfat und vorzugsweise Dibutylphosphat sowie Di-2-ethylhexylphosphat. Die Desaktivierungsmittel können in Mengen von 1 bis 200 Mol-%, vorzugsweise 20 bis 100 Mol-%, bezogen auf die Mole an Katalysator, eingesetzt werden.

Die resultierenden Polyisocyanatgemische weisen in der Regel einen NCO-Gehalt von vorzugsweise 14,0 bis 20,0 Gew.-%, besonders bevorzugt 15,0 bis 19,0 Gew.-% auf.

Die resultierenden Polyisocyanatgemische weisen in der Regel eine Viskosität bei 23 °C von 3 bis 12 Pas, besonders bevorzugt 3,5 bis 8 Pas auf.

In dieser Schrift wird die Viskosität bei 23 °C gemäß DIN EN ISO 3219/A.3 in einem Kegel-Platte-System mit einem Geschwindigkeitsgefälle von 1000 s⁻¹ angegeben, falls nicht anders vermerkt.

Das Verfahren kann gegebenenfalls in einem geeigneten, gegenüber Isocyanatgruppen inerten Lösemittel (D) durchgeführt werden. Geeignete Lösemittel sind beispielsweise die an sich bekannten üblichen Lacklösemittel, wie z. B. Ethylacetat, Butylacetat, Ethylenglykolmonomethyl- oder -ethyletheracetat, 1-Methoxypropyl-2-acetat, 3-Methoxy-n-butylacetat, Aceton, 2-Butanon, *iso*-Butylmethylketon, 4Methyl-2-pentanon, Cyclohexanon, Cyclopentanon, Toluol, Xylol, Chlorbenzol, Testbenzin, höher substituierte Aromaten, wie sie beispielsweise unter den Bezeichnungen Solventnaphtha®, Solvesso®, Shellsol®, Isopar®, Nappar® und Diasol® im Handel sind, Propylenglykoldiacetat, Diethylenglykoldimethylether, Dipropylenglykoldimethylether, Diethylenglykolethyl- und -butyletheracetat, N-Methylpyrrolidon und N-Methylcaprolactam, sowie bevorzugt Kohlensäureester oder Lactone, die in der EP-A1 697 424, S. 4, Z. 4 bis 32 genannt sind, besonders bevorzugt Dimethylcarbonat, Diethylcarbonat, 1,2-Ethylencarbonat und 1,2-Propylencarbonat, Lactone, wie β-Propiolacton, y-Butyrolacton, ε-Caprolacton und ε-Methylcaprolacton, oder beliebige Gemische solcher Lösemittel.

Es ist auch möglich, die Herstellung der Isocyanate zunächst ohne Lösemittel durchzuführen und das so erhältliche Produkt anschließend in einem Lösemittel (D) aufzunehmen.

Das Lösungsmittel (D) kann bezogen auf die Gesamtmischung (Summe der Komponenten (A), (B) und (C)) in Mengen von 0 bis 60 Gew% anwesend sein, bevorzugt in Mengen von 0 bis 50 Gew%.

Die Mischungen können vorzugsweise in Wasser zur Herstellung wäßriger Dispersionen dispergiert werden, besonders bevorzugt werden die Mischungen in wäßrige Dispersionen eingemischt.

Die Polyisocyanatzubereitung eignet sich zur Modifizierung von wäßrigen Beschichtungsmitteln (Lack, Schutzüberzüge) für z.B. Holz, Holzfurnier, Papier, Pappe, Karton, Textil, Leder, Vlies, Kunststoffoberflächen, Glas, Keramik, mineralische Baustoffe wie Zement-Formsteine und Faserzementplatten, Metalle oder beschichtete Metalle, Klebstoff oder Imprägnierungsmittel, z.B. zum Färben, auf Basis von wäßrigen Dispersionen oder Lösungen eines Feststoffgehaltes von 5 bis 40 Gew.%, vorzugsweise von 5 bis 20 Gew.%. Als Beschichtungsmittel kommen die an sich bekannten wäßrigen Dispersionen von Homo- und Copolymerisaten olefinisch ungesättigter Monomerer oder Polyurethanen oder auch Lösungen von Naturstoffen, wie z.B. von Casein, in Betracht.

Die Polyisocyanatzubereitungen werden den wäßrigen Beschichtungsmitteln im allgemeinen in einer Menge von 1 bis 25, vorzugsweise von 2,5 bis 20 Gew-%, bezogen auf den Feststoffgehalt des Beschichtungsmittels, zugesetzt.

Dabei können die Polyisocyanatzubereitungen sowohl in einkomponentige Beschichtungsmassen, beispielsweise in Form von Polyurethandispersionen, oder im Gemisch mit einem hydroxygruppenhaltigen Bindemittel als Zweikomponenten Polyurethanbeschichtungsmasse eingesetzt werden

Sie werden in bekannter Weise durch z.B. Spritzen in einer Menge von 5 bis 50 g Feststoff/m² auf das Substrat aufgebracht.

Geeignete Dispersionen von Homo- oder Copolymerisaten olefinisch ungesättigter Monomerer sind z.B. an sich bekannte Dispersionen von Homo oder Copolymerisaten auf Basis von Vinylestern von Carbonsäuren mit 2 bis 18, vorzugsweise 2 bis 4 Kohlenstoffatomen wie insbesondere Vinylacetat, gegebenenfalls mit bis zu 70 Gew.% bezogen auf Gesamtmenge an olefinisch ungesättigten Monomeren, an anderen olefinisch ungesättigten Monomeren und/oder von Homo- oder Copolymerisaten von (Meth)Acrylsäureestern von Alkoholen mit 1 bis 18, vorzugsweise 1 bis 4 Kohlenstoffatomen wie insbesondere
(Meth)Acrylsäure-, -methyl-, -ethyl-, -propyl-, -hydroxyethyl- oder -hydroxypropylestern, gegebenenfalls zusammen mit bis zu 70 Gew.% an anderen olefinisch ungesättigten Monomeren und/ oder Butadien-Styrol-Copolymerisaten mit einem Gehalt an Butadien von ca. 20 bis 60 Gew-% und/oder von anderen Dien-Polymerisaten oder -Copolymerisaten wie Polybutadien oder Mischpolymerisaten von Butadien mit anderen olefinisch ungesättigten Monomeren wie z.B. Styrol, Acrylnitril und/oder Methacrylnitril und/oder wäßrige Dispersionen von Polymerisaten bzw. Copolymerisaten des 2-Chlor-butadien-1,3, gegebenenfalls mit anderen olefinisch ungesättigten Monomeren der oben beispielhaft genannten Art, z.B. solchen eines Chlorgehalts von ca. 30 bis 40 Gew.%, insbesondere eines Chlorgehalts von ca. 36 Gew%.

Bevorzugt werden wäßrige Dispersionen von Copolymerisaten aus 90 bis 99,5 Gew% Acrylaten oder Methacrylaten von 1 bis 4 C-Atomen enthaltenden Alkanolen und 0,5 bis 10 Gew%, jeweils bezogen auf das Copolymerisat, von Hydroxyalkylacrylaten und -methacrylaten mit 2 bis 20 C-Atomen im Hydroxyalkylrest, wie Hydroxyethyl-, Hydroxypropyl- oder Hydroxybutylacrylat oder -methacrylat. Solche Dispersionen sind an sich bekannt und in üblicher Weise durch Emulsionspolymerisation herstellbar (s. Houben-Weyl, Methoden der organischen Chemie, 4. Auflage, Bd. E 20, S.217 ff. ).

Geeignete wäßrige Polyurethandispersionen sind solche der an sich bekannten Art, wie sie z.B. in US-A 3 479 310, GB-A 1 076 688, US-A 4 108 814, US-A 4 108 814, US-A 4 092 286, DE-A 2 651 505, US-A 4 190 566, DE-A 2 732 131 oder DE-A 2 811 148 beschrieben sind.

Die eingesetzten wäßrigen Dispersionen können die üblichen Hilfs- und Zusatzmittel enthalten. Hierzu gehören beispielsweise Füllstoffe, wie Quarzmehl, Quarzsand, hochdisperse Kieselsäure, Schwerspat, Calciumcarbonat, Kreide, Dolomit oder Talkum, die oft zusammen mit geeigneten Netzmitteln wie z.B. Polyphosphaten wie Natriumhexamethaphosphat, Naphthalinsulfonsäure, Ammonium- oder Natriumpolyacrylsäuresalzen eingesetzt werden, wobei die Netzmittel im allgemeinen in Mengen von 0,2 bis 0,6 Gew%, bezogen auf Füllstoff, zugesetzt werden.

Weitere geeignete Hilfsmittel sind z.B. in Mengen von 0,01 bis 1 Gew.%, bezogen auf die Dispersion, einzusetzende organische Verdickungsmittel wie z.B. Zellulose-Derivate, Alginate, Stärke oder Stärkederivate oder Polyacrylsäure oder in Mengen von 0,05 bis 5 Gew.%, bezogen auf die Dispersion, einzusetzende anorganische Verdickungsmittel wie z.B. Bentonite.

Auch Fungizide zur Konservierung können den Dispersionen zugesetzt werden. Diese kommen im allgemeinen in Mengen von 0,02 bis 1 Gew.-%, bezogen auf die Dispersion, zum Einsatz. Geeignete Fungizide sind beispielsweise Phenol- und Kresol-Derivate oder Zinn-organische Verbindungen.

Substrate für Imprägnierungen sind z.B. synthetische oder nichtsynthetische Fasern bzw. deren Gewebe oder Vliese.

Die Mischungen können sehr feinteilig in wäßrigen Dispersionen dispergiert werden. Die erhaltenen Dispersionen sind sehr lagerstabil. Darüber hinaus benötigt man weniger Zusatzmenge des wasseremulgierbaren Polyisocyanats um die gewünschten Eigenschaften der Dispersion einzustellen bzw. bei der Anwendung zu erreichen.

Die Mischungen können selbstverständlich mit üblichen Hilfs- und Zusatzmitteln der Lacktechnologie versetzt werden. Hierzu gehören beispielsweise Entschäumer, Verdicker, Verlaufshilfsmittel, Pigmente, Emulgatoren, Dispergierhilfsmittel und auch Lösemittel. Die gewünschte Verarbeitungsviskosität wird durch Zugabe von Wasser eingestellt.

Zur Herstellung der Dispersionen reichen in den meisten Fällen einfache Emulgiertechniken, z.B. mit einem mechanischen Rührer, oder oftmals auch eine einfache Mischung der beiden Komponenten per Hand aus, um Dispersionen mit sehr guten Eigenschaften zu erzielen. Selbstverständlich können aber auch Mischtechniken mit höherer Scherenergie, wie z.B. Strahldispergierung, eingesetzt werden.

Die die Mischungen enthaltenden Beschichtungsmittel können insbesondere als Grundierungen, Füller, pigmentierte Decklacke und Klarlacke im Bereich Autoreparatur- oder Großfahrzeuglackierung eingesetzt werden. Besonders geeignet sind die Beschichtungsmittel für Anwendungen, in denen eine besonders hohe Applikationssicherheit, Außenwitterungsbeständigkeit, Optik, Lösemittel-, Chemikalien- und Wasserfestigkeit gefordert werden, wie in der Autoreparatur- und Großfahrzeuglackierung.

Die die Mischungen enthaltenden Beschichtungsmittel können nach den unterschiedlichsten Spritzverfahren, wie z.B. Luftdruck-, Airless- oder Elektrostatik-Spritzverfahren unter Verwendung von Ein- oder Zweikomponenten-Spritzanlagen, aber auch durch Spritzen, Spachteln, Rakeln, Bürsten, Rollen, Walzen, Gießen, Laminieren, Hinterspritzen oder Coextrudieren appliziert werden.

Die Trocknung und Aushärtung der Beschichtungen erfolgt im allgemeinen unter normalen Temperaturbedingungen, d.h. ohne Erhitzung der Beschichtung. Die Mischungen können jedoch auch zur Herstellung von Beschichtungen eingesetzt werden, die nach Applikation bei erhöhter Temperatur, z.B. bei 40 - 250°C, vorzugsweise 40 - 150°C und insbesondere bei 40 bis 100°C getrocknet und ausgehärtet werden.

Die folgenden Beispiele sollen die Eigenschaften der Erfindung erläutern, ohne sie aber einzuschränken.

### Beispiele

Als "Teile" seien in dieser Schrift, wenn nicht anders angegeben, "Gewichtsteile" verstanden.

### Polyisocyanat A:

HDI-Isocyanurat mit einem NCO-Gehalt von 22,2% und einer Viskosiät von 2800 mPa*s bei 23°C (kommerziell erhältlich als Basonat® HI 100 der BASF SE, Ludwigshafen).

### Polyether A:

Auf Methanol gestartetes und unter Kaliumhydroxidkatalyse hergestelltes, monofunktionelles Polyethylenoxid mit einer OH-Zahl von 112 (nach DIN 53240) und einem Molekulargewicht von 500 g/mol. Die noch anwesenden basischen Katalysatorreste wurden anschließend mit Essigsäure neutralisiert und das Produkt entsalzt. Hierbei wird auch gebildetes Kaliumacetat entfernt.

### Polyether B:

Unter Kaliumhydroxidkatalyse hergestelltes, difunktionelles Polyethylenoxid mit einer OH-Zahl von 560 (nach DIN 53240) und einem Molekulargewicht von 200 g/mol. Die noch anwesenden basischen Katalysatorreste wurden anschließend mit Essigsäure neutralisiert.

### Polyether C:

Auf Trimethylolpropan gestartetes und unter Kaliumhydroxidkatalyse hergestelltes, trifunktionelles Polyethylenoxid mit einer OH-Zahl von 600 mg KOH/g (nach DIN 53240) und einem Molekulargewicht von 280 g/mol. Die noch anwesenden basischen Katalysatorreste wurden anschlieβend mit Essigsäure neutralisiert.

### Polyesterol A:

Auf Trimethylolpropan gestartetes, trifunktionelles Polycaprolacton mit einer OH-Zahl von 310 (nach DIN 53240) und einem Molekulargewicht von 540 g/mol.

### Polyol A:

Rizinusöl (OH-Zahl 164 mg KOH/g)

### Vergleichsbeispiel 1:

Es wurden 174g Polyisocyanat A und 26 Polyether A bei 85°C über 4 Stunden umgesetzt. Das entsprechende Produkt hat einen NCO-Gehalt von 17,9%, eine Viskosität von 2550 mPas bei 23°C und wäre nur teilweise wasserdispergierbar.

### Beispiel 1:

Es wurden 250g Polyisocyanat A, 35g Polyether A und 5g Polyol A unter Zusatz von 0,06g Zinkneodecanoat (50%ig in Butylacetat) als Katalysator umgesetzt. Nach 2 Stunden bei 85°C betrug der NCO-Gehalt 17,6%. Das entsprechende Produkt hat eine Viskosität von 3900 mPas bei 23°C und eine Farbzahl von 33 Hazen.

### Beispiel 2:

Es wurden 250g Polyisocyanat A, 45g Polyether A und 6 g Polyesterol A ohne Zusatz von Katalysator umgesetzt. Nach 3 Stunden bei 90°C betrug der NCO-Gehalt 16,7%. Das entsprechende Produkt hat eine Viskosität von 4080 mPas bei 23°C und eine Farbzahl von 43 Hazen.

### Beispiel 3:

Es wurden 250g Polyisocyanat A, 40g Polyether A, 2g Polyether B und 5g Polyol A unter Zusatz von 0,06g Dibutylzinndilaurat als Katalysator umgesetzt. Nach 3 Stunden bei 90°C betrug der NCO-Gehalt 16,8%. Das entsprechende Produkt hat eine Viskosität von 4680 mPas bei 23°C und eine Farbzahl von 76 Hazen.

### Beispiel 4:

Es wurden 250g Polyisocyanat A, 44g Polyether A, 1,5g Polyether C unter Zusatz von 0,03g Dibutylzinndilaurat als Katalysator umgesetzt. Nach 3 Stunden bei 90°C betrug der NCO-Gehalt 17,1 %. Das entsprechende Produkt hat eine Viskosität von 3530 mPas bei 23°C und eine Farbzahl von 42 Hazen.

### Glanzmessungen :

### Komponente A:

Blumor Intensiv Komponente der Firma Blanchon.

Das 100%ige Polyisocyanat wurde mit Dipropylenglykoldimethylether auf 70% verdünnt. Danach wurden 5g dieser Härtermenge zu 45g der Komponente A hinzugegeben. Die Formulierung wurde dann mit einem Holzspatel ca. 20 sek. mit 140-180 U/min per Hand verrührt. Der fertige Lack wurde anschließend unfiltriert mit einem 150µm Kastenrakel auf eine Kartonplatte appliziert. Nach Trocknung (30 min bei 60 °C) wurde der Glanz unter zwei verschiedenen Winkeln (20° und 60°) mit einem micro TRI Gloss µ Apparat der Firma Byk gemessen.

| Glanz | Vergleichsbeispiel | Beispiel 1 | Beispiel 2 | Beispiel 3 | Beispiel 4 |
|---|---|---|---|---|---|
| 20° | 2,3 | 11 | 10,5 | 8,6 | 8,3 |
| 60° | 17,8 | 44,5 | 42,5 | 39,2 | 38,3 |

## Patentansprüche

1. Wasseremulgierbare Polyisocyanate, enthaltend
(A) mindestens ein Polyisocyanat auf Basis mindestens eines (cyclo)aliphatischen Diisocyanates,
(B) mindestens ein Polyol, das
- eine Funktionalität an Hydroxygruppen von mindestens 2 und bis zu 4 und
- ein zahlenmittleres Molgewicht von mindestens 92 bis 1500 g/mol aufweist,
(C) mindestens ein Ethylenoxidgruppen aufweisender Monoalkohol, der mindestens 7 Ethylenoxidgruppen aufweist, und
(D) gegebenenfalls Lösungsmittel, wobei
- das Verhältnis von NCO-Gruppen in (A) zu Hydroxygruppen in (B) und (C) von mindestens 5:1 bis 100:1 beträgt,
- der Gehalt an Ethylenoxidgruppen, berechnet als 44 g/mol, bezogen auf die Summe von (A), (B) und (C) mindestens 12 Gew%, bevorzugt mindestens 14, besonders bevorzugt mindestens 15 Gew% beträgt,
- der Gehalt an Komponente (B) von 0,5 bis 4,0 Gew% beträgt,
- der Gehalt an Komponente (C) mindestens 5 und bis zu 25 Gew% beträgt, und
- die Viskosität bei 23 °C gemäß DIN EN ISO 3219/A.3 in einem Kegel-Platte-System mit einem Geschwindigkeitsgefälle von 1000 s⁻¹ von 2500 mPas bis 12000 mPas beträgt.

2. Wasseremulgierbare Polyisocyanate gemäß Anspruch 1, **dadurch gekennzeichnet, daß** das (cyclo)aliphatische Diisocyanat ausgewählt ist aus der Gruppe bestehend aus Hexamethylendiisocyanat, 1,3-Bis(isocyanatomethyl)cyclohexan, Isophorondiisocyanat, 4,4'- Di(isocyanatocyclohexyl)methan und 2,4'-Di(isocyanatocyclohexyl)methan.

3. Wasseremulgierbare Polyisocyanate gemäß Anspruch 1, **dadurch gekennzeichnet, daß** es sich bei dem Polyisocyanat um ein Isocyanurat von 1,6-Hexamethylendiisocyanat handelt.

4. Wasseremulgierbare Polyisocyanate gemäß einem der vorstehenden Ansprüche, **dadurch gekennzeichnet, daß** es sich bei der Verbindung (B) um
(B1) Veresterungsprodukte mindestens einer Fettsäure mit mindestens einem Polyalkohol und/oder um
(B2) Veresterungsprodukte mindestens einer Hydroxyalkancarbonsäure oder deren entsprechendem Lacton mit mindestens einem Polyalkohol und/oder um
(B3) mindestens einen optional alkoxylierten Polyalkohol
handelt.

5. Wasseremulgierbare Polyisocyanate gemäß Anspruch 4, **dadurch gekennzeichnet, daß** es sich bei der Verbindung (B1) um Ricinusöl mit einer OH-Zahl von 160 bis 173 mg KOH/g handelt.

6. Wasseremulgierbare Polyisocyanate gemäß Anspruch 4, **dadurch gekennzeichnet, daß** es sich bei den Verbindungen (B2) um folgende handelt 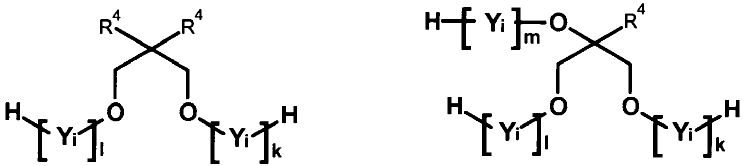 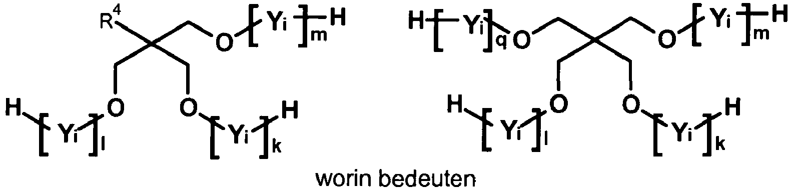
R⁴ Wasserstoff oder einen C1- bis C4-Alkylrest,
k, I, m und q jeweils unabhängig voneinander eine positive ganze Zahl von 1 bis 5, bevorzugt 1 bis 4 und besonders 2 bis 3,
Yi für jedes i jeweils unabhängig voneinander einen Rest -[-O-(CH₂)_{z}-(C=O)-]- und
z eine positive ganze Zahl von 2 bis 6, bevorzugt 2 bis 5, besonders bevorzugt 3 bis 5.

7. Wasseremulgierbare Polyisocyanate gemäß Anspruch 4, **dadurch gekennzeichnet, daß** es sich bei den Verbindungen (B3) um solche der Formel 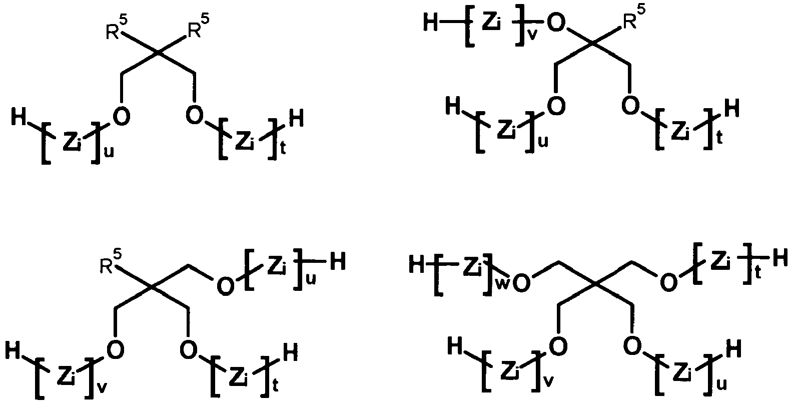 worin
R⁵ Wasserstoff oder einen C₁- bisC₄-Alkylrest,
t, u, v und w jeweils unabhängig voneinander 0 oder eine positive ganze Zahl von 1 bis 6, bevorzugt bis 4 und besonders bevorzugt bis 3,
jedes Zᵢ für i = 1 bis t, 1 bis u, 1 bis v und 1 bis w unabhängig voneinander ausgewählt sein kann aus der
pe -CH₂-CH₂-O- -CH₂-CH(CH₃)-O-, -CH(CH₃)-CH₂-O- -CH₂-C(CH₃)₂-O-, -C(CH₃)₂-CH₂-O-, -CH₂-CHVin-O-, -CHVin-CH₂-O-, -CH₂-CHPh-O- und -CHPh-CH₂-O-, bevorzugt aus der Gruppe -CH₂-CH₂-O-, -CH₂-CH(CH₃)-O- und -CH(CH₃)-CH₂-O-, und besonders bevorzugt -CH₂-CH₂-O-
handelt.

8. Wasseremulgierbare Polyisocyanate gemäß einem der vorliegenden Ansprüche, **dadurch gekennzeichnet, daß** es sich bei Verbindungen (C) um Verbindungen der Formel
R¹-O-[-Xᵢ-]ₖ-H
handelt, worin
R¹ C₁ - C₁₈-Alkyl, gegebenenfalls durch ein oder mehrere Sauerstoff- und/oder Schwefelatome und/oder ein oder mehrere substituierte oder unsubstituierte Iminogruppen unterbrochenes C₂ - C₁₈-Alkyl, C₆ - C₁₂-Aryl, C₅ - C₁₂-Cycloalkyl oder einen fünf- bis sechsgliedrigen, Sauerstoff-, Stickstoff- und/oder Schwefelatome aufweisenden Heterocyclus bedeuten,
k für eine ganze Zahl von 5 bis 35, bevorzugt 7 bis 30, besonders bevorzugt 7 bis 25 und insbesondere 10 bis 22 steht und
jedes Xᵢ für i = 1 bis k unabhängig voneinander für -CH₂-CH₂-O- steht.

9. Verwendung von wasseremulgierbaren Polyisocyanat gemäß einem der vorstehenden Ansprüche in Beschichtungsmitteln für Holz, Holzfurnier, Papier, Pappe, Karton, Textil, Leder, Vlies, Kunststoffoberflächen, Glas, Keramik, mineralische Baustoffe, Metalle oder beschichtete Metalle.

## Claims

1. A water-emulsifiable polyisocyanate comprising
(A) at least one polyisocyanate based on at least one (cyclo)aliphatic diisocyanate,
(B) at least one polyol having
- a functionality of hydroxyl groups of at least 2 and up to 4 and
- a number-average molar weight of at least 92 to 1500 g/mol,
(C) at least one monoalcohol containing ethylene oxide groups, which has at least 7 ethylene oxide groups, and
(D) optionally solvent, where
- the ratio of NCO groups in (A) to hydroxyl groups in (B) and (C) is from at least 5:1 to 100:1,
- the amount of ethylene oxide groups, calculated as 44 g/mol, based on the sum total of (A), (B) and (C), is at least 12% by weight, preferably at least 14%, more preferably at least 15% by weight,
- the amount of component (B) is from 0.5 to 4.0% by weight,
- the amount of component (C) is at least 5% and up to 25% by weight, and
- the viscosity at 23°C in accordance with DIN EN ISO 3219/A.3 in a cone/plate system with a shear rate of 1000 s⁻¹ is from 2500 mPas to 12 000 mPas.

2. The water-emulsifiable polyisocyanate according to claim 1, wherein the (cyclo)aliphatic diisocyanate is selected from the group consisting of hexamethylene diisocyanate, 1,3-bis(isocyanatomethyl)cyclohexane, isophorone diisocyanate, 4,4'-di(isocyanatocyclohexyl)methane, and 2,4'-di (isocyanatocyclohexyl)methane.

3. The water-emulsifiable polyisocyanate according to claim 1, wherein the polyisocyanate is an isocyanurate of hexamethylene 1,6-diisocyanate.

4. The water-emulsifiable polyisocyanate according to any of the preceding claims, wherein the compound (B) comprises
(B1) esterification products of at least one fatty acid with at least one polyalcohol and/or
(B2) esterification products of at least one hydroxyalkane carboxylic acid or the corresponding lactone with at least one polyalcohol and/or
(B3) at least one optionally alkoxylated polyalcohol.

5. The water-emulsifiable polyisocyanate according to claim 4, wherein the compound (B1) is castor oil having an OH number of 160 to 173 mg KOH/g.

6. The water-emulsifiable polyisocyanate according to claim 4, wherein the compounds (B2) are as follows: 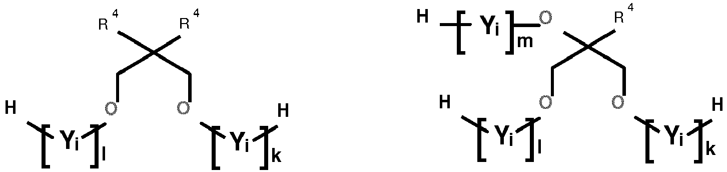 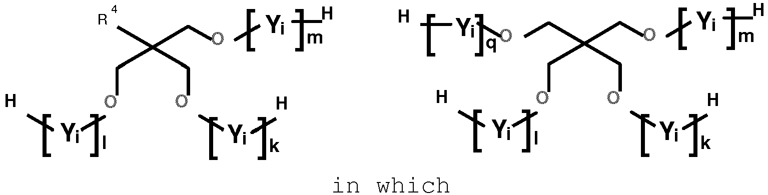
R⁴ is hydrogen or a C1 to C4 alkyl radical,
k, 1, m, and q in each case independently of one another are a positive integer from 1 to 5, preferably 1 to 4, and especially 2 to 3,
Yi for each i, in each case independently of one another, is a radical -[-O-(CH₂)_{z} - (C=O) - ] -, and
z is a positive integer from 2 to 6, preferably 2 to 5, more preferably 3 to 5.

7. The water-emulsifiable polyisocyanate according to claim 4, wherein the compounds (B3) are compounds of the formula 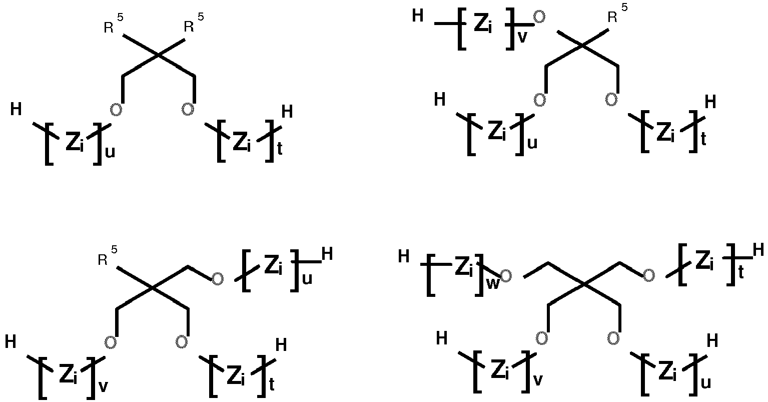 in which
R⁵ is hydrogen or a C₁ to C₄ alkyl radical,
t, u, v, and w in each case independently of one another are 0 or a positive integer from 1 to 6, preferably to 4, and more preferably to 3,
each Zᵢ for i = 1 to t, 1 to u, 1 to v, and 1 to w, independently of one another, may be selected from the group -CH₂-CH₂-O-, -CH₂-CH(CH₃)-O-, -CH (CH₃) -CH₂-O-, -CH₂-C (CH₃) ₂-O-, -C (CH₃) ₂-CH₂-O-, -CH₂-CHVin-O-, -CHVin-CH₂-O-, -CH₂-CHPh-O-, and -CHPh-CH₂-O-, preferably from the group -CH₂-CH₂-O-, -CH₂-CH(CH₃)-O-, and -CH(CH₃)-CH₂-O-, and more preferably -CH₂-CH₂-O-.

8. The water-emulsifiable polyisocyanate according to any of the preceding claims, wherein compounds (C) are compounds of the formula
R¹-O-[-Xᵢ-]ₖ-H
in which
R¹ is C₁-C₁₈ alkyl, C₂-C₁₈ alkyl optionally interrupted by one or more oxygen and/or sulfur atoms and/or by one or more substituted or unsubstituted imino groups, or is C₆ - C₁₂ aryl, C₅-C₁₂ cycloalkyl, or a five- to six-membered heterocycle containing oxygen, nitrogen and/or sulfur atoms,
k is an integer from 5 to 35, preferably 7 to 30, more preferably 7 to 25, and more particularly 10 to 22, and
each Xᵢ for i = 1 to k, independently of one another, is -CH₂-CH₂-O-.

9. The use of water-emulsifiable polyisocyanate according to any of the preceding claims in coating materials for wood, wood veneer, paper, paperboard, cardboard, textile, leather, nonwoven, plastics surfaces, glass, ceramic, mineral building materials, metals, or coated metals.

## Revendications

1. Polyisocyanates émulsifiables dans de l'eau, contenant :
(A) au moins un polyisocyanate à base d'au moins un diisocyanate (cyclo)aliphatique,
(B) au moins un polyol, qui présente
- une fonctionnalité en groupes hydroxy d'au moins 2 et de jusqu'à 4, et
- un poids moléculaire moyen en nombre d'au moins 92 à 1 500 g/mol,
(C) au moins un monoalcool comprenant des groupes oxyde d'éthylène, qui comprend au moins 7 groupes oxyde d'éthylène, et
(D) éventuellement un solvant,
- le rapport entre les groupes NCO dans (A) et les groupes hydroxy dans (B) et (C) étant d'au moins 5:1 1 à 100:1,
- la teneur en groupes oxyde d'éthylène, calculée comme étant de 44 g/mol, par rapport à la somme de (A), (B) et (C), étant d'au moins 12 % en poids, de préférence d'au moins 14, de manière particulièrement préférée d'au moins 15 % en poids,
- la teneur en composant (B) étant de 0,5 à 4,0 % en poids,
- la teneur en composant (C) étant d'au moins 5 et de jusqu'à 25 % en poids, et
- la viscosité à 23 °C selon DIN EN ISO 3219/A.3 dans un système à cône et plaque avec un gradient de vitesse de 1 000 s⁻¹ étant de 2 500 mPas à 12 000 mPas.

2. Polyisocyanates émulsifiables dans de l'eau selon la revendication 1, **caractérisés en ce que** le diisocyanate (cyclo)aliphatique est choisi dans le groupe constitué par le diisocyanate d'hexaméthylène, le 1,3-bis(isocyanatométhyl)cyclohexane, le diisocyanate d'isophorone, le 4,4'-di(isocyanatocyclohexyl)méthane et le 2,4'-di(isocyanatocyclohexyl)méthane.

3. Polyisocyanates émulsifiables dans de l'eau selon la revendication 1, **caractérisés en ce que** le polyisocyanate est un isocyanurate de diisocyanate de 1,6-hexaméthylène.

4. Polyisocyanates émulsifiables dans de l'eau selon l'une quelconque des revendications précédentes, **caractérisés en ce que** le composé (B) consiste en
(B1) des produits d'estérification d'au moins un acide gras avec au moins un polyalcool et/ou
(B2) des produits d'estérification d'au moins un acide hydroxyalcanecarboxylique ou sa lactone correspondante avec au moins un polyalcool et/ou
(B3) au moins un polyalcool éventuellement alcoxylé.

5. Polyisocyanates émulsifiables dans de l'eau selon la revendication 4, **caractérisés en ce que** le composé (B1) consiste en de l'huile de ricin ayant un indice OH de 160 à 173 mg KOH/g.

6. Polyisocyanates émulsifiables dans de l'eau selon la revendication 4, **caractérisés en ce que** les composés (B2) consistent en les composés suivantes : 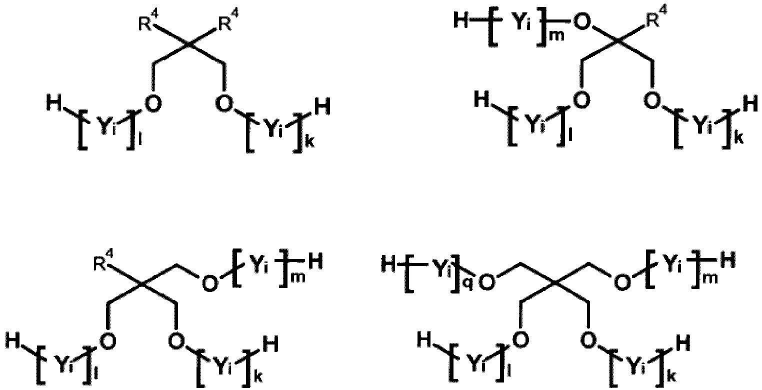 dans lesquels
R⁴ signifie l'hydrogène ou un radical alkyle en C1 à C4,
k, 1, m et q signifient chacun indépendamment les uns des autres un nombre entier positif de 1 à 5, de préférence de 1 à 4, et particulièrement de 2 à 3,
les Yi signifient pour chaque i à chaque fois indépendamment les uns des autres un radical -[-0-(CH₂)z-(C=O)-]- et
z signifie un nombre entier positif de 2 à 6, de préférence de 2 à 5, de manière particulièrement préférée de 3 à 5.

7. Polyisocyanates émulsifiables dans de l'eau selon la revendication 4, **caractérisés en ce que** les composés (B3) consistent en les composés suivantes : 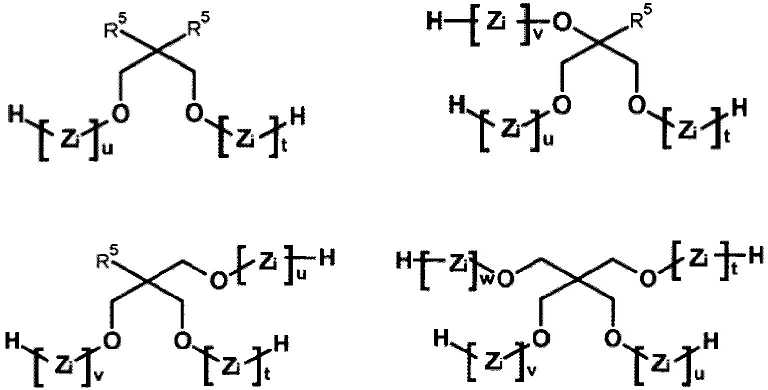 dans lesquels
R⁵ signifie l'hydrogène ou un radical alkyle en C₁ à C₄, t, u, v et w signifient chacun indépendamment les uns des autres 0 ou un nombre entier positif de 1 à 6, de préférence de jusqu'à 4 et de manière particulièrement préférée de jusqu'à 3,
chacun des Zᵢ pour i = 1 à t, 1 à u, 1 à v et 1 à w peuvent être choisis indépendamment les uns des autres dans le groupe constitué par -CH₂-CH₂-O-, -CH₂-CH (CH₃) -O--CH(CH₃)-CH₂-O-, -CH₂-C(CH₃)₂-O-, -C(CH₃)₂-CH₂-O-, -CH₂-CHVin-O-, -CHVin-CH₂-O-, -CH₂-CHPh-O- et -CHPh-CH₂-O-, de préférence dans le groupe constitué par -CH₂-CH₂-O-, -CH₂-CH(CH₃)-O- et -CH (CH₃)-CH₂-O-, et de manière particulièrement préférée -CH₂-CH₂-O-.

8. Polyisocyanates émulsifiables dans de l'eau selon l'une quelconque des revendications précédentes, **caractérisés en ce que** les composés (C) sont des composés de formule
R¹-O-[-Xᵢ-]ₖ-H
dans laquelle
R¹ signifie alkyle en C₁-C₁₈, alkyle en C₂-C₁₈ éventuellement interrompu par un ou plusieurs atomes d'oxygène et/ou de soufre et/ou un ou plusieurs groupes imino substitués ou non substitués, aryle en C₆-C₁₂, cycloalkyle en C₅-C₁₂ ou un hétérocycle de cinq à six éléments, comprenant des atomes d'oxygène, d'azote et/ou de soufre,
k représente un nombre entier de 5 à 35, de préférence de 7 à 30, de manière particulièrement préférée de 7 à 25, et notamment de 10 à 22, et
chacun des Xᵢ pour i = 1 à k représentent indépendamment les uns des autres -CH₂-CH₂-O-.

9. Utilisation d'un polyisocyanate émulsifiable dans de l'eau selon l'une quelconque des revendications précédentes dans des agents de revêtement pour le bois, le placage de bois, le papier, le carton, les textiles, le cuir, les non-tissés, les surfaces en plastique, le verre, la céramique, les matériaux de construction minéraux, les métaux ou les métaux revêtus.
